# FASCICULE DE BREVET EUROPEEN

(11) **EP 2 088 810 B1**
(45) Date de publication et mention de la délivrance du brevet: **27.06.2012**
(21) Numéro de dépôt: 09152018.9
(22) Date de dépôt: 04.02.2009
(51) Int. Cl.: H04W 8/26

(54) **Dispositif de conversion bidirectionelle d'identifiants de communication en adresses de communication pour l'interfonctionnement entre résaux de types différents**
Vorrichtung zur bidirektionalen Umsetzung von Kommunikationsidentifizierern in Kommunikationsadressen für die Interoperabilität zwischen verschiedenen Arten von Netzwerken
Apparatus for bidirectional conversion of communication identifiers into communication addresses for interworking between different types of networks

(30) Priorité: 07.02.2008 FR 0850782
(43) Date de publication de la demande: 12.08.2009
(73) Titulaire: Alcatel Lucent, 75007 Paris (FR)
(72) Inventeur: Mongazon-Cazavet, Bruno, 91620, NOZAY (FR); Gras, Laurence, 91620, NOZAY (FR)
(74) Mandataire: El Manouni, Josiane

(56) Documents cités:
- US-A1- 2004 208 321
- ANONYMOUS: "IMSI - MSISDN conversion" RESEARCH DISCLOSURE, MASON PUBLICATIONS, HAMPSHIRE, GB, vol. 493, no. 93, 1 mai 2005 (2005-05-01), XP007135128 ISSN: 0374-4353

## Description

L'invention concerne les réseaux de communication filaires et non filaires, et plus précisément l'interfonctionnement (ou « inter-working ») entre de tels réseaux.

Comme le sait l'homme de l'art, certains réseaux de communication, comme par exemple ceux de type mobile (ou cellulaire), utilisent des identifiants de communication de P chiffres (ou « digits ») pour identifier les usagers clients (ou souscripteurs), alors que d'autres réseaux de communication, comme par exemple ceux de type WiMAX, utilisent des adresses de communication de K bits pour identifier les usagers clients (ou souscripteurs). Ainsi, dans un réseau GSM ou UMTS, on utilise des identifiants de 15 chiffres (P = 15), appelés MSISDN (« Mobile Station (ou Subscriber) Integrated Services Digital Network Number »), alors que dans un réseau WiMAX on utilise des adresses de 48 bits (K = 48), appelées adresses MAC WiMAX.

Certains terminaux (de communication) d'usagers sont capables de se connecter à deux réseaux d'accès de réseaux de communication de types différents (par exemple cellulaire et WiMAX). Cela est avantageux car cela permet d'envisager la continuité de leurs sessions de communication lorsqu'ils doivent passer d'un réseau d'accès à un autre. Mais, pour assurer une telle continuité, une fonction d'interfonctionnement doit être mise en oeuvre entre les deux réseaux de communication, et cette fonction d'interfonctionnement doit connaître l'identifiant de communication et l'adresse de communication dont disposent, auprès de ces deux réseaux de communication, les usagers qui veulent qu'on leur assure une continuité de session.

Il est rappelé qu'il existe au moins deux modes d'interfonctionnement : un mode dit d'entrée initiale (dans lequel on simule une entrée initiale d'un terminal sur un réseau de communication), et un mode dit de «transfert de contexte » ou de « pré-attachement » (en anglais « handover ») (dans lequel on simule un handover ou une itinérance (ou « roaming ») d'un terminal dans un réseau).

Par ailleurs, on entend ici par « continuité de session » le fait qu'un terminal conserve une même adresse externe du point de vue de ses correspondants, permettant ainsi la continuité du trafic avec ces derniers.

Lorsqu'une fonction d'interfonctionnement est sollicitée lors d'une procédure d'identification d'un usager, mais qu'elle ne dispose que de l'identifiant (ou de l'adresse) de cet usager, alors elle doit déterminer l'adresse manquante (ou l'identifiant manquant) de façon statique ou dynamique. Aujourd'hui, la détermination statique se fait au moyen d'une table de correspondance identifiants/adresses qui pose un réel problème de mise à l'échelle (ou « scalability »), tandis que la détermination dynamique se fait soit au moyen d'une recherche d'informations de correspondance, soit au moyen d'une allocation aléatoire d'adresse ou d'identifiant (et d'un stockage), ce qui est ni suffisamment sûre, ni suffisamment efficace.

Aucune solution connue n'apportant une entière satisfaction, l'invention a donc pour but d'améliorer la situation.

Elle propose à cet effet un procédé dédié à la conversion bidirectionnelle automatique entre des identifiants de communication constitués de P chiffres, et des adresses de communication, constituées de K bits, de terminaux mobiles capables de se connecter à au moins deux réseaux d'accès de réseaux de communication de types différents.

Ce procédé se caractérise par le fait qu'il consiste:
- en cas de réception d'un identifiant de communication, à décomposer ce dernier en un nombre M choisi de groupes Gm d'au moins un chiffre définissant un nombre décimal, puis à convertir chacun de ces M nombres décimaux en un nombre binaire d'un nombre Nm de bits choisi, et à constituer une adresse de communication avec ces M nombres binaires en plaçant leurs bits respectifs en des positions choisies qui ont été attribuées aux M groupes Gm, et
- en cas de réception d'une adresse de communication, à décomposer ce dernier en M ensembles Em de Nm bits définissant chacun un nombre binaire, puis à convertir chacun de ces M nombres binaires en un nombre décimal d'au moins un chiffre constituant un groupe Gm, et à constituer un identifiant de communication avec ces chiffres des M groupes Gm en les plaçant en des positions choisies qui leurs ont été attribuées.

Le procédé selon l'invention peut comporter d'autres caractéristiques qui peuvent être prises séparément ou en combinaison, et notamment :
- lorsque l'on est en présence d'identifiants de communication de type MSISDN, constitués de quinze chiffres, et d'adresses de communication de type MAC WiMAX, constituées de 48 bits, on peut par exemple choisir un nombre M de groupes Gm égal à 6 ;
   ➢ on peut constituer i) un premier groupe G1 avec les deux chiffres les plus à gauche de l'identifiant MSISDN, ii) un deuxième groupe G2 avec le chiffre de l'identifiant MSISDN qui est placé immédiatement à droite du chiffre le plus à droite du premier groupe G1, iii) un troisième groupe G3 avec les trois chiffres de l'identifiant MSISDN qui sont placés immédiatement à droite du chiffre le plus à droite du deuxième groupe G2, iv) un quatrième groupe G4 avec les trois chiffres de l'identifiant MSISDN qui sont placés immédiatement à droite du chiffre le plus à droite du troisième groupe G3, v) un cinquième groupe G5 avec les trois chiffres de l'identifiant MSISDN qui sont placés immédiatement à droite du chiffre le plus à droite du quatrième groupe G4, et vi) un sixième groupe G6 avec les trois chiffres de l'identifiant MSISDN qui sont placés immédiatement à droite du chiffre le plus à droite du cinquième groupe G5 ;
   ➢ on peut constituer i) un premier ensemble E1 avec les 4 bits les plus à gauche de l'adresse MAC WiMAX, ii) un deuxième ensemble E2 avec les 4 bits qui sont placés immédiatement à droite du bit le plus à droite du premier ensemble E1, iii) un troisième ensemble E3 avec les 10 bits qui sont placés immédiatement à droite du bit le plus à droite du deuxième ensemble E2, iv) un quatrième ensemble E4 avec les 10 bits qui sont placés immédiatement à droite du bit le plus à droite du troisième ensemble E3, v) un cinquième ensemble E5 avec les 10 bits qui sont placés immédiatement à droite du bit le plus à droite du quatrième ensemble E4, et vi) un sixième ensemble E6 avec les 10 bits qui sont placés immédiatement à droite du bit le plus à droite du cinquième ensemble E5 ;
   ➢ on peut convertir le nombre décimal formé par les deux chiffres du premier groupe G1 en un nombre binaire au moyen d'une table établissant des correspondances entre des paires de chiffres et dés nombres binaires. De même, on peut convertir un nombre binaire, qui est défini par les N1 bits d'un premier ensemble E1, en un nombre décimal d'un premier groupe G1 au moyen de cette table de correspondance.

L'invention propose également un dispositif dédié à la conversion bidirectionnelle automatique entre des identifiants de communication constitués de P chiffres, et des adresses de communication, constituées de K bits, de terminaux mobiles capables de se connecter à au moins deux réseaux d'accès de réseaux de communication de types différents.

Ce dispositif de conversion se caractérise par le fait qu'il comprend des moyens de traitement chargés :
- en cas de réception d'un identifiant de communication, de décomposer ce dernier en un nombre M choisi de groupes Gm d'au moins un chiffre définissant un nombre décimal, puis de convertir chacun de ces M nombres décimaux en un nombre binaire d'un nombre Nm de bits choisi, et de constituer une adresse de communication avec ces M nombres binaires en plaçant leurs bits respectifs en des positions choisies qui ont été attribuées aux M groupes Gm, et
- en cas de réception d'une adresse de communication, de décomposer ce dernier en M ensembles Em de Nm bits définissant chacun un nombre binaire, puis de convertir chacun de ces M nombres binaires en un nombre décimal d'au moins un chiffre constituant un groupe Gm, et de constituer un identifiant de communication avec ces chiffres des M groupes Gm en les plaçant en des positions choisies qui leurs ont été attribuées.

Le dispositif selon l'invention peut comporter d'autres caractéristiques qui peuvent être prises séparément ou en combinaison, et notamment :
- ses moyens de traitement peuvent être chargés, en présence d'identifiants de communication de type MSISDN, constitués de quinze chiffres, et d'adresses de communication de type MAC WiMAX, constituées de 48 bits, de procéder à une décomposition en un nombre M de groupes Gm égal à 6 ;
   ➢ ses moyens de traitement peuvent être chargés de constituer i) un premier groupe G1 avec les deux chiffres les plus à gauche de l'identifiant MSISDN, ii) un deuxième groupe G2 avec le chiffre de l'identifiant MSISDN qui est placé immédiatement à droite du chiffre le plus à droite du premier groupe G1, iii) un troisième groupe G3 avec les trois chiffres de l'identifiant MSISDN qui sont placés immédiatement à droite du chiffre le plus à droite du deuxième groupe G2, iv) un quatrième groupe G4 avec les trois chiffres de l'identifiant MSISDN qui sont placés immédiatement à droite du chiffre le plus à droite du troisième groupe G3, v) un cinquième groupe G5 avec les trois chiffres de l'identifiant MSISDN qui sont placés immédiatement à droite du chiffre le plus à droite du quatrième groupe G4, et vi) un sixième groupe G6 avec les trois chiffres de l'identifiant MSISDN qui sont placés immédiatement à droite du chiffre le plus à droite du cinquième groupe G5;
   ➢ ses moyens de traitement peuvent être chargés de constituer i) un premier ensemble E1 avec les 4 bits les plus à gauche de l'adresse MAC WIMAX, ii) un deuxième ensemble E2 avec les 4 bits qui sont placés immédiatement à droite du bit le plus à droite du premier ensemble E1, iii) un troisième ensemble E3 avec les 10 bits qui sont placés immédiatement à droite du bit le plus à droite du deuxième ensemble E2, iv) un quatrième ensemble E4 avec les 10 bits qui sont placés immédiatement à droite du bit le plus à droite du troisième ensemble E3, v) un cinquième ensemble E5 avec les 10 bits qui sont placés immédiatement à droite du bit le plus à droite du quatrième ensemble E4, et vi) un sixième ensemble E6 avec les 10 bits qui sont placés immédiatement à droite du bit le plus à droite du cinquième ensemble E5 ;
   ➢ ses moyens de traitement peuvent être chargés i) de convertir le nombre décimal formé par les deux chiffres d'un premier groupe G1 en un nombre binaire au moyen d'une table établissant des correspondances entre des paires de chiffres et des nombres binaires, et de convertir un nombre binaire, qui est défini par les N1 bits du premier ensemble E1, en un nombre décimal d'un premier groupe G1 au moyen de cette table de correspondance.

L'invention propose également un équipement de réseau, pour un coeur de réseau connecté à au moins deux réseaux de communication de types différents, et équipé d'un dispositif de conversion du type de celui présenté ci-avant. Cela permet avantageusement de sécuriser et protéger les conversions.

L'invention est particulièrement bien adaptée, bien que de façon non exclusive, aux conversions dans le cadre d'un interfonctionnement entre un réseau de communication sans fil de type cellulaire (ou mobile) et un réseau de communication sans fil de type WiMAX.

D'autres caractéristiques et avantages de l'invention apparaîtront à l'examen de la description détaillée ci-après, et des dessins annexés, sur lesquels :

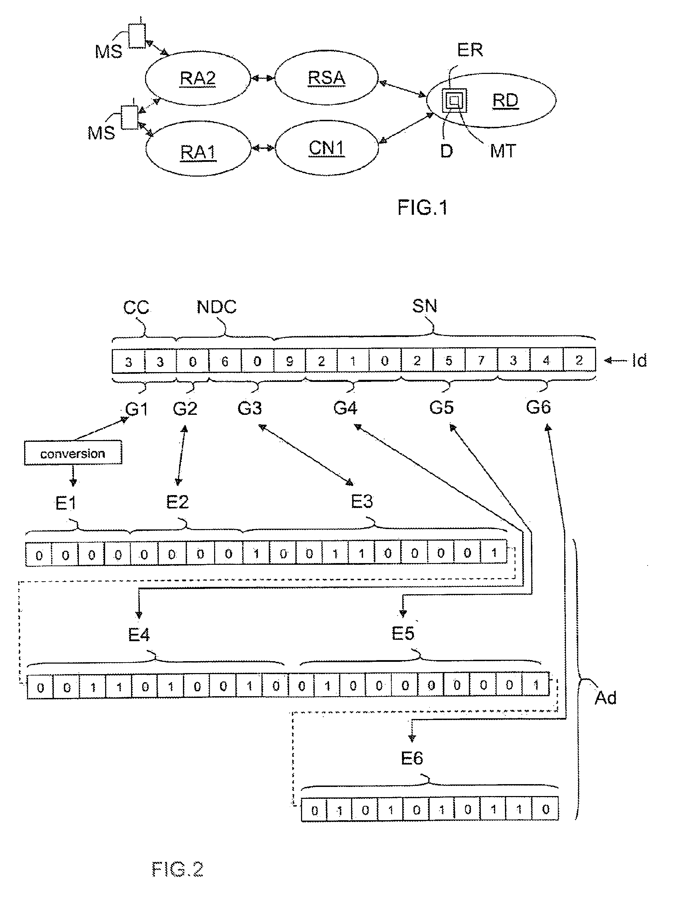

- la figure 1 illustre de façon très schématique et fonctionnelle deux réseaux sans fil de types différents couplés via un coeur de réseau comprenant un équipement de réseau mettant en oeuvre une fonction d'interfonctionnement et comportant un dispositif de conversion selon l'invention.
- la figure 1 illustre de façon très schématique un exemple de conversion entre un identifiant MSISDN et une adresse MAC WiMAX.

Les dessins annexés pourront non seulement servir à compléter l'invention, mais aussi contribuer à sa définition, le cas échéant.

L'invention a pour objet de permettre la conversion bidirectionnelle automatique entre des identifiants de communication et des adresses de communication d'usagers munis de terminaux mobiles (m) capables de se connecter à au moins deux réseaux de communication de types différents.

Dans ce qui suit, on considère à titre d'exemple non limitatif que les deux réseaux de communication sont respectivement un réseau cellulaire (ou mobile), de type 3GPP, comme par exemple un réseau GSM ou UMTS, et un réseau WiMAX (standards IEEE 802.16 et ETSI HiperMAN, notamment). Mais, l'invention n'est pas limitée à ce couple de réseaux de communication. Elle concerne en effet tout couple de réseaux de communication (filaire(s) ou non filaire(s)) de types différents dans lesquels les usagers sont identifiés au moyen respectivement d'un identifiant de communication comportant P chiffres (par exemple stocké dans une carte SIM de leur terminal) et d'une adresse de communication comportant K bits. Par conséquent, l'invention concerne également certains réseaux filaires, comme par exemple ceux de type Ethernet, et certains réseaux non filaires, comme par exemple ceux de type Wi-Fi (802.11g).

On notera que l'invention concerne notamment la récupération d'adresses selon un mécanisme de type DHCP.

Il est rappelé que dans un réseau mobile (ou cellulaire), par exemple GSM ou UMTS, les usagers clients sont identifiés au moyen d'identifiants de communication appelés MSISDN (« Mobile Station (ou Subscriber) Integrated Services Digital Network Number »). Un identifiant MSISDN (Id) est constitué de P chiffres (ou « digits »), avec P = 15. Ces 15 chiffres sont répartis dans trois champs appelés CC (« Country Code » - indicatif du pays où est implanté le réseau de domicile de l'usager du terminal mobile), NDC (« National Destination Code » - code de destination national), et SN (« Subscriber Number » - numéro de souscripteur de l'usager). Le champ CC est placé le plus à gauche d'un identifiant MSISDN et comporte deux chiffres, le champ SN est placé le plus à droite d'un identifiant MSISDN et comporte dix chiffres, et le champ NDC est intercalé entre les champs CC et SN d'un identifiant MSISDN et comporte trois chiffres.

Dans un réseau WiMAX les usagers clients sont identifiés au moyen d'adresses de communication appelées adresses MAC WiMAX. Une adresse MAC WiMAX (Ad) est constituée de K bits, avec K = 48.

Comme cela est schématiquement illustré sur la figure 1, un réseau mobile peut par exemple être résumé à un coeur de réseau CN1 (généralement appelé « 3GPP packet core ») couplé à au moins un réseau d'accès radio (appelé RAN (pour «Radio Access Network ») RA1 auquel peuvent se connecter des terminaux (sans fil) d'usagers MS, et un réseau WiMAX peut par exemple être résumé à un réseau de service d'accès (appelé ASN (pour « access service network »)) RSA couplé à un réseau de service d'un fournisseur de service (appelé CSN (pour « Connectivity Service Network »)) RD et à un réseau d'accès radio (appelé RAN) RA2 auquel peuvent se connecter des terminaux (sans fil) d'usagers MS. On notera que dans un réseau WiMAX les connexions des terminaux MS sont de type « paquet » et non de type « voix » comme c'est le cas dans un réseau cellulaire classique.

On notera qu'en cas d'interfonctionnement (ou « inter-working ») entre le réseau mobile et le réseau WiMAX, le réseau de service RD est également couplé au réseau mobile et comprend un équipement de réseau (ou noeud) ER, appelé « serving IWK » et mettant en oeuvre une fonction d'interfonctionnement (ou IWF pour « Inter-Working Function ») nécessitant des conversions bidirectionnelles selon l'invention. De telles conversions peuvent par exemple servir à identifier de manière unique un terminal MS vis-à-vis d'un réseau de service (ou CSN) RD quel que soit le réseau de communication utilisé. Sans cette invention, une double identité serait en effet nécessaire tant au niveau du contrôle d'accès qu'au niveau de la facturation.

Ce type d'équipement de réseau ER est généralement connecté, d'une part, à un noeud appelé GGSN (pour « Gateway GPRS-Support Node » - assurant la connexion à un réseau de services) du coeur de réseau CN1 du réseau mobile, via une interface appelée Gi, et d'autre part, à un équipement appelé HA (pour « Home Agent » - agent de domicile) de son coeur de réseau RD, via une interface appelée R3. L'équipement HA est généralement connecté à la passerelle appelée ASN GW du réseau de service d'accès RSA du réseau WiMAX, via une interface appelée R3 ou éventuellement R6.

L'invention propose un procédé de conversion bidirectionnelle pouvant être mis en oeuvre par un dispositif de conversion D qui peut par exemple être implanté dans (ou couplé à) l'équipement de réseau ER du réseau de service RD qui offre la fonction d'interfonctionnement précitée.

Ce procédé comprend deux parties. Une première partie concerne la conversion des identifiants (de communication), ici des identifiants MSISDN (Id), en adresses (de communication), ici des adresses MAC WiMAX (Ad). On comprendra que cette première partie est effectuée chaque fois que l'on doit déterminer l'identifiant MSISDN d'un usager à partir de son l'adresse MAC WiMAX. Une seconde partie concerne la conversion des adresses (de communication), ici des adresses MAC WiMAX (Ad), en identifiants (de communication), ici des identifiants MSISDN (Id). On comprendra que cette seconde partie est effectuée chaque fois que l'on doit déterminer l'adresse MAC WiMAX d'un usager à partir de son identifiant MSISDN.

On notera que ces deux parties sont mises en oeuvre par le dispositif de conversion D, qui dispose à cet effet d'un module de traitement MT.

La première partie du procédé consiste, chaque fois que l'équipement de réseau ER reçoit du réseau (ici mobile) un identifiant MSISDN d'un usager de terminal MS à convertir en adresse MAC WiMAX, à décomposer cet identifiant MSISDN en un nombre M choisi de groupes Gm (m = 1 à M) d'au moins un chiffre définissant un nombre décimal, puis à convertir chacun de ces M nombres décimaux en un nombre binaire d'un nombre Nm de bits choisi, et finalement à constituer une adresse de communication avec ces M nombres binaires en plaçant leurs bits respectifs en des positions choisies qui ont été attribuées aux M groupes Gm.

Il est important de noter que le nombre Nm de bits d'un nombre binaire peut varier d'un groupe Gm à un autre Gm'.

On a schématiquement illustré sur la figure 2 un exemple de conversion d'un identifiant MSISDN Id en une adresse MAC WiMAX Ad. Dans cet exemple, l'identifiant MSISDN Id à convertir comprend une suite ordonnée de 15 chiffres (P = 15, 330609210257342) répartis dans les trois champs CC (33), NDC (060) et SN (9210257342). Le nombre M de groupes Gm est ici choisi égal à 6 (soit G1 à G6), à titre d'exemple non limitatif. Plus précisément :
- un premier groupe G1 est constitué des deux chiffres (ici 3 et 3) qui sont situés les plus à gauche de l'identifiant MSISDN Id et qui constituent le champ CC. Ces deux chiffres constituent un premier nombre décimal (33),
- un deuxième groupe G2 est constitué du chiffre (ici 0) de l'identifiant MSISDN qui est placé immédiatement à droite du chiffre qui est situé le plus à droite dans le premier groupe G1. On notera que ce chiffre est l'un des trois chiffres du champ NDC. Par ailleurs, ce chiffre constitue un deuxième nombre décimal (0),
- un troisième groupe G3 est constitué des trois chiffres (ici 6, 0 et 9) de l'identifiant MSISDN qui sont placés immédiatement à droite du chiffre du deuxième groupe G2. On notera que ces trois chiffres sont les deux autres chiffres (6 et 0) du champ NDC et le chiffre (9) le plus à gauche du champ SN. Par ailleurs, ces trois chiffres constituent un troisième nombre décimal (609),
- un quatrième groupe G4 est constitué des trois chiffres (ici 2, 1 et 0) de l'identifiant MSISDN qui sont placés immédiatement à droite du chiffre qui est situé le plus à droite dans le troisième groupe G3. On notera que ces trois chiffres sont trois autres chiffres du champ SN. Par ailleurs, ces trois chiffres constituent un quatrième nombre décimal (210),
- un cinquième groupe G5 est constitué des trois chiffres (ici 2, 5 et 7) de l'identifiant MSISDN qui sont placés immédiatement à droite du chiffre qui est situé le plus à droite dans le quatrième groupe G4. On notera que ces trois chiffres sont encore trois autres chiffres du champ SN. Par ailleurs, ces trois chiffres constituent un cinquième nombre décimal (257), et
- un sixième groupe G6 est constitué des trois chiffres (ici 3, 4 et 2) de l'identifiant MSISDN qui sont placés immédiatement à droite du chiffre le plus à droite dans le cinquième groupe G5. On notera que ces trois chiffres sont encore trois autres chiffres du champ SN. Par ailleurs, ces trois chiffres constituent un sixième nombre décimal (342).

Le premier nombre décimal représenté par le(s) chiffre(s) du premier groupe G1 est converti (par le module de traitement MT) en un nombre binaire E1 constitué de N1 bits. Ici N1 est choisi égal à 4, à titre d'exemple. Cela n'offre que seize possibilités pour convertir les deux chiffres constituant le code de pays CC. Mais, on notera qu'il est relativement rare qu'un réseau implanté dans un pays soit couplé (interconnecté) à d'autres réseaux implantés dans plus de seize autres pays.

Cette première conversion peut par exemple se faire au moyen d'une petite table de correspondance entre des codes de pays (à deux chiffres) et des nombres binaires (à quatre bits). Par exemple, on peut choisir d'attribuer au pays local le nombre binaire 0000. Cette table de correspondance est par exemple stockée dans le dispositif D, éventuellement dans son module de traitement MT.

Le deuxième nombre décimal représenté par le(s) chiffre(s) du deuxième groupe G2 est converti (par le module de traitement MT) en un nombre binaire E2 constitué de N2 bits. Ici N2 est choisi égal à 4, à titre d'exemple, si bien que E2 est la représentation binaire du deuxième nombre décimal d'un seul chiffre que comprend G2. On vérifie bien que dans l'exemple illustré, le chiffre 0 que comprend le deuxième groupe G2 est converti en un nombre binaire E2 égal à 0000.

Le troisième nombre décimal représenté par le(s) chiffre(s) du troisième groupe G3 est converti (par le module de traitement MT) en un nombre binaire E3 constitué de N3 bits. Ici N3 est choisi égal à 10, à titre d'exemple, si bien que E3 est la représentation binaire du troisième nombre décimal défini par la suite de trois chiffres « 609 » que comprend G2. On vérifie bien que dans l'exemple illustré, le troisième nombre décimal de trois chiffres 609 que comprend le troisième groupe G3 est converti en un nombre binaire E3 égal à 1001100001.

Le quatrième nombre décimal représenté par le(s) chiffre(s) du quatrième groupe G4 est converti (par le module de traitement MT) en un nombre binaire E4 constitué de N4 bits. Ici N4 est choisi égal à 10, à titre d'exemple, si bien que E4 est la représentation binaire du quatrième nombre décimal défini par la suite de trois chiffres «210» que comprend G4. On vérifie bien que dans l'exemple illustré, le quatrième nombre décimal de trois chiffres 210 que comprend le quatrième groupe G4 est converti en un nombre binaire E4 égal à 0011010010.

Le cinquième nombre décimal représenté par le(s) chiffre(s) du cinquième groupe G5 est converti (par le module de traitement MT) en un nombre binaire E5 constitué de N5 bits. Ici N5 est choisi égal à 10, à titre d'exemple, si bien que E5 est la représentation binaire du cinquième nombre décimal défini par la suite de trois chiffres « 257 » que comprend G5. On vérifie bien que dans l'exemple illustré, le cinquième nombre décimal de trois chiffres 257 que comprend le cinquième groupe G5 est converti en un nombre binaire E5 égal à 0100000001.

Le sixième nombre décimal représenté par le(s) chiffre(s) du sixième groupe G6 est converti (par le module de traitement MT) en un nombre binaire E6 constitué de N6 bits. Ici N6 est choisi égal à 10, à titre d'exemple, si bien que E6 est la représentation binaire du sixième nombre décimal défini par la suite de trois chiffres « 342 » que comprend G6. On vérifie bien que dans l'exemple illustré, le sixième nombre décimal de trois chiffres 342 que comprend le sixième groupe G6 est converti en un nombre binaire E6 égal à 0101010110.

La suite ordonnée de nombres binaires E1 à E6 (l'indice m croissant de gauche à droite) constitue alors l'adresse MAC WiMAX Ad qui résulte de la conversion de l'identifiant MSISDN Id. Elle est délivrée par le dispositif D pour son équipement de réseau ER. On comprendra que la position de chaque ensemble de bits Em dans une adresse MAC WiMAX Ad correspond exactement à la position qui a été attribuée au groupe Gm dont il est issu par conversions. Ici, on considère que les groupes Gm sont ordonnés de la gauche vers la droite, avec l'indice m croissant (soit de G1 à G6).

L'adresse MAC WiMAX Ad obtenue peut alors être stockée localement en correspondance de l'identifiant MSISDN Id auquel elle correspond, en vue d'une utilisation lors d'une procédure d'identification du terminal MS qui est utilisé par l'usager auquel est associé cet identifiant MSISDN Id, par exemple lors d'un transfert de session entre le réseau mobile et le réseau WiMAX, ou lors d'une entrée initiale (ou « network entry ») ou d'un handover.

La seconde partie du procédé consiste, chaque fois que l'équipement de réseau ER reçoit du réseau WiMAX une adresse MAC WiMAX Ad d'un usager de terminal MS à convertir en identifiant MSISDN Id, à décomposer cette adresse MAC WiMAX Ad en M ensembles Em (m = 1 à M) de Nm bits définissant chacun un nombre binaire, puis à convertir chacun de ces M nombres binaires Em en un nombre décimal d'au moins un chiffre constituant un groupe Gm, et à constituer un identifiant de communication avec les chiffres de ces M groupes Gm en les plaçant en des positions choisies qui leurs ont été attribuées.

Dans l'exemple illustré sur la figure 2; le module de traitement MT décompose l'adresse MAC WiMAX Ad en :
- un premier ensemble E1 comprenant ses 4 bits les plus à gauche (soit ici 0000),
- un deuxième ensemble E2 comprenant ses 4 bits qui sont placés immédiatement à droite du bit (ici 0) qui est situé le plus à droite dans le premier ensemble E1 (soit ici 0000),
- un troisième ensemble E3 comprenant ses 10 bits qui sont placés immédiatement à droite du bit (ici 0) qui est situé le plus à droite dans le deuxième ensemble E2 (soit ici 1001100001),
- un quatrième ensemble E4 comprenant ses 10 bits qui sont placés immédiatement à droite du bit (ici 1) qui est situé le plus à droite dans le troisième ensemble E3 (soit ici 0011010010),
- un cinquième ensemble E5 comprenant ses 10 bits qui sont placés immédiatement à droite du bit (ici 0) qui est situé le plus à droite dans le quatrième ensemble E4 (soit ici 0100000001), et
- un sixième ensemble E6 comprenant ses 10 bits qui sont placés immédiatement à droite du bit (ici 1) qui est situé le plus à droite dans le cinquième ensemble E5 (soit ici 0101010110).

Le premier nombre binaire constitué des N1 bits de l'ensemble E1 est converti (par le module de traitement MT) en un premier nombre décimal de deux chiffres, par exemple au moyen de la table de correspondance précitée. Ici, on considère que le nombre binaire 0000 correspond au code du pays local (ici 33, pour la France). Le nombre binaire E1, égal à 0000, est donc converti en un premier nombre décimal 33 de deux chiffres qui constituent le premier groupe G1.

Le deuxième nombre binaire constitué des N2 bits de l'ensemble E2 est converti (par le module de traitement MT) en un deuxième nombre décimal de un chiffre. On vérifie bien que dans l'exemple illustré, le nombre binaire E2, égal à 0000, est converti en un deuxième nombre décimal 0 d'un seul chiffre qui constitue le deuxième groupe G2.

Le troisième nombre binaire constitué des N3 bits dé l'ensemble E3 est converti (par le module de traitement MT) en un troisième nombre décimal de trois chiffres. On vérifie bien que dans l'exemple illustré, le nombre binaire E3, égal à 1001100001, est converti en un troisième nombre décimal 609 de trois chiffres qui constituent le troisième groupe G3.

Le quatrième nombre binaire constitué des N4 bits de l'ensemble E4 est converti (par le module de traitement MT) en un quatrième nombre décimal de trois chiffres. On vérifie bien que dans l'exemple illustré, le nombre binaire E4, égal à 0011010010, est converti en une quatrième nombre décimal 210 de trois chiffres qui constituent le quatrième groupe G4.

Le cinquième nombre binaire constitué des N5 bits de l'ensemble E5 est converti (par le module de traitement MT) en un cinquième nombre décimal de trois chiffres. On vérifie bien que dans l'exemple illustré, le nombre binaire E5, égal à 0100000001, est converti en un cinquième nombre décimal 257 de trois chiffres qui constituent le cinquième groupe G5.

Le sixième nombre binaire constitué des N6 bits de l'ensemble E6 est converti (par le module de traitement MT) en un sixième nombre décimal de trois chiffres. On vérifie bien que dans l'exemple illustré, le nombre binaire E6, égal à 0101010110, est converti en un sixième nombre décimal 342 de trois chiffres qui constituent le sixième groupe G6.

La suite ordonnée des chiffres constituant les nombres décimaux des groupes G1 à G6 (l'indice m croissant de gauche à droite) constitue alors l'identifiant MSISDN Id qui résulte de la conversion de l'adresse MAC WiMAX Ad. Elle est délivrée par le dispositif D pour son équipement de réseau ER. On comprendra que la position de chaque suite de chiffre(s) d'un nombre décimal dans un identifiant MSISDN Id correspond exactement à la position qui a été attribuée à son groupe Gm. Ici on considère que les groupes Gm sont ordonnés de la gauche vers la droite, avec l'indice m croissant (soit de G1 à G6).

L'identifiant MSISDN Id obtenu peut alors être stocké localement en correspondance de l'adresse MAC WiMAX Ad à laquelle il correspond, en vue d'une utilisation lors d'une procédure d'identification du terminal MS qui est utilisé par l'usager auquel est associée cette adresse MAC WiMAX Ad, par exemple lors d'un transfert de session entre le réseau mobile et le réseau WiMAX, ou lors d'une entrée initiale (ou « network entry ») ou d'un handover.

L'adresse MAC WiMAX Ad obtenue peut alors être stockée localement en correspondance de l'identifiant MSISDN Id auquel elle correspond, en vue d'une utilisation lors d'une procédure d'identification du terminal MS qui est utilisé par l'usager auquel est associé cet identifiant MSISDN Id, par exemple lors d'un transfert de session entre le réseau mobile et le réseau WiMAX, ou lors d'une entrée initiale ou d'un handover.

Le dispositif de conversion D selon l'invention, et notamment son module de traitement MT, est préférentiellement réalisé sous la forme de modules logiciels (ou informatiques). Mais, il peut être également réalisé sous la forme de circuits électroniques ou d'une combinaison de circuits électroniques et de modules logiciels.

On notera que la conversion selon l'invention est particulièrement avantageuse du fait qu'elle ne nécessite pas de modification protocolaire. En outre, la conversion selon l'invention est particulièrement simple et efficace et ne nécessite pas de stockage d'une table de correspondance de très gros volume. De plus, la conversion selon l'invention est bijective, permettant ainsi de l'utiliser dans les deux sens.

L'invention ne se limite pas aux modes de réalisation de dispositif de conversion, d'équipement de réseau et de procédé de conversion décrits ci-avant, seulement à titre d'exemple, mais elle englobe toutes les variantes que pourra envisager l'homme de l'art dans le cadre des revendications ci-après.

## Revendications

1. Procédé de conversion bidirectionnelle entre des identifiants de communication constitués de P chiffres, et des adresses de communication, constituées de K bits, de terminaux mobiles (MS) propres à se connecter à au moins deux réseaux de communication de types différents, **caractérisé en ce qu'**il consiste i) en cas de réception d'un identifiant de communication, à décomposer ce dernier en un nombre M choisi de groupes Gm d'au moins un chiffre définissant un nombre décimal, puis à convertir chacun desdits M nombres décimaux en un nombre binaire d'un nombre Nm de bits choisi, et à constituer une adresse de communication avec lesdits M nombres binaires en plaçant leurs bits respectifs en des positions choisies qui ont été attribuées auxdits M groupes Gm, et ii) en cas de réception d'une adresse de communication, à décomposer ce dernier en M ensembles Em de Nm bits définissant chacun un nombre binaire, puis à convertir chacun desdits M nombres binaires en un nombre décimal d'au moins un chiffre constituant un groupe Gm, et à constituer un identifiant de communication avec lesdits chiffres des M groupes Gm en les plaçant en des positions choisies qui leurs ont été attribuées.

2. Procédé selon la revendication 1, **caractérisé en ce qu'**en présence d'identifiants de communication de type MSISDN, constitués de quinze chiffres, et d'adresses de communication de type MAC WiMAX, constituées de 48 bits, on choisit un nombre M de groupes Gm égal à 6.

3. Procédé selon la revendication 2, **caractérise en ce qu'**un premier groupe G1 est constitué des deux chiffres les plus à gauche de l'identifiant MSISDN, un deuxième groupe G2 est constitué du chiffre de l'identifiant MSISDN qui est placé immédiatement à droite du chiffre le plus à droite dudit premier groupe G1, un troisième groupe G3 est constitué des trois chiffres de l'identifiant MSISDN qui sont placés immédiatement à droite du chiffre le plus à droite dudit deuxième groupe G2, un quatrième groupe G4 est constitué des trois chiffres de l'identifiant MSISDN qui sont placés immédiatement à droite du chiffre le plus à droite dudit troisième groupe G3, un cinquième groupe G5 est constitué des trois chiffres de l'identifiant MSISDN qui sont placés immédiatement à droite du chiffre le plus à droite dudit quatrième groupe G4. et un sixième groupe G6 est constitué des trois chiffres de l'identifiant MSISDN qui sont placés immédiatement à droite du chiffre le plus à droite dudit cinquième groupe G5.

4. Procédé selon l'une des revendications 2 et 3, **caractérisé en ce qu'**un premier ensemble E1 est constitué des 4 bits les plus à gauche de l'adresse MAC WiMAX, un deuxième ensemble E2 est constitué des 4 bits qui sont placés immédiatement à droite du bit le plus à droite dudit premier ensemble E1, un troisième ensemble E3 est constitué des 10 bits qui sont placés immédiatement à droite du bit le plus à droite dudit deuxième ensemble E2, un quatrième ensemble E4 est constitué des 10 bits qui sont placés immédiatement à droite du bit le plus à droite dudit troisième ensemble E3, un cinquième ensemble E5 est constitué des 10 bits qui sont placés immédiatement à droite du bit le plus à droite dudit quatrième ensemble E4, et un sixième ensemble E6 est constitué des 10 bits qui sont placés immédiatement à droite du bit le plus à droite dudit cinquième ensemble E5.

5. Procédé selon l'une des revendications 2 à 4, **caractérisé en ce que** l'on convertit le nombre décimal formé par les deux chiffres dudit premier groupe G1 en un nombre binaire au moyen d'une table établissant des correspondances entre des paires de chiffres et des nombres binaires, et l'on convertit ledit nombre binaire, défini par les N1 bits dudit premier ensemble E1, en un nombre décimal d'un premier groupe G1 au moyen de ladite table de correspondance.

6. Dispositif (D) de conversion bidirectionnelle entre des identifiants de communication constitués de P chiffres, et des adresses de communication, constituées de K bits, de terminaux mobiles (MS) propres à se connecter à au moins deux réseaux de communication de types différents, **caractérisé en ce qu'**il comprend des moyens de traitement (MT) agencés i) en cas de réception d'un identifiant de communication, pour décomposer ce dernier en un nombre M choisi de groupes Gm d'au moins un chiffre définissant un nombre décimal, puis à convertir chacun desdits M nombres décimaux en un nombre binaire d'un nombre Nm de bits choisi, et pour constituer une adresse de communication avec lesdits M nombres binaires en plaçant leurs bits respectifs en des positions choisies qui ont été attribuées auxdits M groupes Gm, et ii) en cas de réception d'une adresse de communication, pour décomposer ce dernier en M ensembles Em de Nm bits définissant chacun un nombre binaire, puis pour convertir chacun desdits M nombres binaires en un nombre décimal d'au moins un chiffre constituant un groupe Gm, et pour constituer un identifiant de communication avec lesdits chiffres des M groupes Gm en les plaçant en des positions choisies qui leurs ont été attribuées.

7. Dispositif selon la revendication 6, **caractérisé en ce que** lesdits moyens de traitement (MT) sont agencés, en présence d'identifiants de communication de type MSISDN, constitués de quinze chiffres, et d'adresses de communication de type MAC WiMAX, constituées de 48 bits, pour procéder à une décomposition en un nombre M de groupes Gm égal à 6.

8. Dispositif selon la revendication 7, **caractérisé en ce que** lesdits moyens de traitement (MT) sont agencés pour constituer i) un premier groupe G1 avec les deux chiffres les plus à gauche de l'identifiant MSISDN, ii) un deuxième groupe G2 avec le chiffre de l'identifiant MSISDN qui est placé immédiatement à droite du chiffre le plus à droite dudit premier groupe G1, iii) un troisième groupe G3 avec les trois chiffres de l'identifiant MSISDN qui sont placés immédiatement à droite du chiffre le plus à droite dudit deuxième groupe G2, iv) un quatrième groupe G4 avec les trois chiffres de l'identifiant MSISDN qui sont placés immédiatement à droite du chiffre le plus à droite dudit troisième groupe G3, v) un cinquième groupe G5 avec les trois chiffres de l'identifiant MSISDN qui sont placés immédiatement à droite du chiffre le plus à droite dudit quatrième groupe G4, et vi) un sixième groupe G6 avec les trois chiffres de l'identifiant MSISDN qui sont placés immédiatement à droite du chiffre le plus à droite dudit cinquième groupe G5.

9. Dispositif selon l'une des revendications 7 et 8, **caractérisé en ce que** lesdits moyens de traitement (MT) sont agencés pour constituer i) un premier ensemble E1 avec les 4 bits les plus à gauche de l'adresse MAC WiMAX, ii) un deuxième ensemble E2 avec les 4 bits qui sont placés immédiatement à droite du bit le plus à droite dudit premier ensemble E1, iii) un troisième ensemble E3 avec les 10 bits qui sont placés immédiatement à droite du bit le plus à droite dudit deuxième ensemble E2, iv) un quatrième ensemble E4 avec les 10 bits qui sont placés immédiatement à droite du bit le plus à droite dudit troisième ensemble E3, v) un cinquième ensemble E5 avec les 10 bits qui sont placés immédiatement à droite du bit le plus à droite dudit quatrième ensemble E4, et vi) un sixième ensemble E6 avec les 10 bits qui sont placés immédiatement à droite du bit le plus à droite dudit cinquième ensemble E5.

10. Dispositif selon l'une des revendications 7 à 9, **caractérisé en ce que** lesdits moyens de traitement (MT) sont agencés i) pour convertir le nombre décimal formé par les deux chiffres d'un premier groupe G1 en un nombre binaire au moyen d'une table établissant des correspondances entre des paires de chiffres et des nombres binaires, et pour convertir un nombre binaire, défini par les N1 bits dudit premier ensemble E1, en un nombre décimal d'un premier groupe G1 au moyen de ladite table de correspondance.

11. Equipement de réseau (ER) pour un coeur de réseau (RD) connecté à au moins deux réseaux sans fil de types différents, **caractérisé en ce qu'**il comprend un dispositif de conversion (D) selon l'une des revendications 6 à 10.

## Claims

1. A method for bidirectional conversion between communication identifiers, made up of P digits, and communication addresses, made up of K bits, of mobile terminals (MS) capable of connecting to at least two communication networks of different types, **characterized in that** it consists i) when receiving a communication identifier, of breaking that communication identifier down into a chosen number M of groups Gm of at least one digit defining a decimal number, then of converting each of said M decimal numbers into a binary number with a chosen number Nm of bits, and of forming a communication address with said M binary numbers by placing their respective bits into chosen positions which had been assigned to said M groups Gm, and ii) when receiving a communication address, of breaking that communication address down into M sets Em of Nm bits, each defining a binary number, then converting each of said M binary numbers into a decimal number of at least one digit constituting a group Gm, and forming a communication identifier with said digits of M groups Gm by placing them into chosen positions that were assigned to them.

2. A method according to claim 1, **characterized in that** in the presence of MSISDN communication identifiers, made up of fifteen digits, and MAC WiMAX communication addresses, made up of 48 bits, a number M of groups Gm equal to 6 are chosen.

3. A method according to claim 2, **characterized in that** a first group G1 is formed of the two left-most digits of the MSISDN identifier, a second group G2 is formed of the digit of the MSISDN identifier that is located immediately to the right of the right-most digit of said first group G1, a third group G3 is formed of the three digits of the MSISDN identifier that are located immediately to the right of the right-most digit of said second group G2, a fourth group G4 formed of the three digits of the MSISDN identifier that are located immediately to the right of the right-most digit of said third group G3, a fifth group G5 is formed of the three digits of the MSISDN identifier that are located immediately to the right of the right-most digit of said fourth group G4, and a sixth group G6 is formed of the three digits of the MSISDN identifier that are located immediately to the right of the right-most digit of said fifth group G5.

4. A method according to one of the claims 2 and 3, **characterized in that** a first set E1 is formed of the 4 left-most bits of the MAC WiMAX address, a second set E2 is formed of the 4 bits that are located immediately to the right of the right-most digit of said first set E1, a third set E3 is formed of the 10 bits that are located immediately to the right of the right-most digit of said second set E2, a fourth set E4 is formed of the 10 bits that are located immediately to the right of the right-most digit of said third set E3, a fifth set E5 is formed of the 10 bits that are located immediately to the right of the right-most digit of said fourth set E4, and a sixth set E6 is formed of the 10 bits that are located immediately to the right of the right-most digit of said fifth set E5.

5. A method according to one of the claims 2 to 4, **characterized in that** the decimal number formed by the two digits of said first group G1 are converted into a binary number by means of a table that establishes matches between pairs of digits and binary numbers, and **in that** the binary number, defined by the N1 bits of said first set E1, are converted into a decimal number of a first group G1 by means of said match table.

6. An apparatus for bidirectional conversion between communication identifiers made up of P digits, and communication addresses, made up of K bits, of mobile terminals (MS) capable of connecting to at least two communication networks of different types, **characterized in that** it comprises processing means (MT) operative i) when receiving a communication identifier, to break that communication identifier down into a chosen number M of groups Gm of at least one digit defining a decimal number, then of converting each of said M decimal numbers into a binary number with a chosen number Nm of bits, and to form a communication address with said M binary numbers by placing their respective bits into chosen positions which had been assigned to said M groups Gm, and ii) when receiving a communication address, to break that communication address down into a decimal number with at least one digit constituting a group Gm, and to form a communication identifier with said digits of M groups Gm by placing them into chosen positions that were assigned to them.

7. An apparatus according to claim 6, **characterized in that** said processing means (MT) are operative, in the presence of MSISDN communication identifiers, formed of fifteen digits, and MAC WiMAX communication addresses, formed of 48 bits, in order to carry out a breakdown into a number M of groups Gm equal to 6.

8. An apparatus according to claim 7, **characterized in that** said processing means (MT) are operative to form i) a first group G1 with the two left-most digits of the MSISDN identifier, ii) a second group G2 with the digit of the MSISDN identifier that is located immediately to the right of the right-most digit of said first group G1, iii) a third group G3 with the three digits of the MSISDN identifier that are located immediately to the right of the right-most digit of said second group G2, iv) a fourth group G4 with the three digits of the MSISDN identifier that are located immediately to the right of the right-most digit of said third group G3, v) a fifth group G5 with the three digits of the MSISDN identifier that are located immediately to the right of the right-most digit of said fourth group G4, and vi) a sixth group G6 with the three digits of the MSISDN identifier that are located immediately to the right of the right-most digit of said fifth group G5.

9. An apparatus according to claim 7 and 8, **characterized in that** said processing means (MT) are operative to form i) a first set E1 with the 4 left-most bits of the MAC WiMAX address, ii) a second set E2 with of the 4 bits that are located immediately to the right of the right-most digit of said first set E1, iii) a third set E3 with the 10 bits that are located immediately to the right of the right-most digit of said second set E2, iv) a fourth set E4 with the 10 bits that are located immediately to the right of the right-most digit of said third set E3, v) a fifth set E5 with the 10 bits that are located immediately to the right of the right-most digit of said fourth set E4, and vi) a sixth set E6 with the 10 bits that are located immediately to the right of the right-most digit of said fifth set E5.

10. An apparatus according to one of the claims 7 to 9, **characterized in that** said processing means (MT) are operative i) to convert the decimal number formed by the two digits of a first group G1 into a binary number by means of a table establishing matches between pairs of digits, and to convert a binary number, defined by the N1 bits of said first set E1, into a decimal number of a first group G1 by means of said match table.

11. A network device (ER) for a network core (RD) connected to at least two wireless networks of different types, **characterized in that** it comprises a conversion apparatus (D) according to one of the claim 6 to 10.

## Patentansprüche

1. Verfahren zur bidirektionalen Konversion zwischen Kommunikationskennungen, bestehend aus P Ziffern, und Kommunikationsadressen, bestehend aus K Bits, von mobilen Endgeräten (MS), die mit mindestens zwei Kommunikationsnetzwerken unterschiedlichen Typs verbunden werden können, **dadurch gekennzeichnet, dass** es darin besteht, i) im Fall des Empfangs einer Kommunikationskennung, diese in eine gewählte Anzahl M von Gruppen Gm mit mindestens einer Ziffer, welche eine Dezimalzahl bestimmt, zu zerlegen, und anschließend eine jede der besagten M Dezimalzahlen in eine Binärzahl mit einer gewählten Anzahl Nm von Bits zu konvertieren und eine Kommunikationsadresse mit den besagten M Binärzahlen zu bilden, indem deren jeweilige Bits in gewählten Positionen, die den besagten M Gruppen Gm zugewiesen wurden, angeordnet werden, und ii) im Fall des Empfangs einer Kommunikationsadresse, diese in M Sätze Em von Nm Bits, von denen ein jedes eine Binärzahl bestimmt, zu zerlegen, und anschließend eine jede der besagten M Binärzahlen in eine Dezimalzahl mit mindestens einer Ziffer, welche eine Gruppe Gm bildet, zu konvertieren und eine Kommunikationskennung mit den besagten Ziffern der M Gruppen Gm zu bilden, indem diese in gewählten Positionen, die ihnen zugewiesen wurden, angeordnet werden.

2. Verfahren nach Anspruch 1, **dadurch gekennzeichnet, dass** man bei Vorhandensein von Kommunikationskennungen vom Typ MSISDN, bestehend aus fünfzehn Ziffern, und von Kommunikationsadressen vom Typ MAC WiMAX, bestehend aus 48 Bits, eine Anzahl M von Gruppen Gm von gleich 6 wählt.

3. Verfahren nach Anspruch 2, **dadurch gekennzeichnet, dass** eine erste Gruppe G1 aus den zwei Ziffern der MSISDN-Kennung, die sich am weitesten links befinden, gebildet wird, eine zweite Gruppe G2 aus der Ziffer der MSISDN-Kennung, die unmittelbar rechts hinter der Ziffer, welche sich am weitesten rechts der besagten ersten Gruppe G1 befindet, angeordnet ist, gebildet wird, eine dritte Gruppe G3 aus den drei Ziffern der MSISDN-Kennung, die unmittelbar rechts hinter der Ziffer, welche sich am weitesten rechts der besagten zweiten Gruppe G2 befindet, angeordnet sind, gebildet wird, eine vierte Gruppe G4 aus den drei Ziffern der MSISDN-Kennung, die unmittelbar rechts hinter der Ziffer, welche sich am weitesten rechts der besagten dritten Gruppe G3 befindet, angeordnet sind, gebildet wird, eine fünfte Gruppe G5 aus den drei Ziffern der MSISDN-Kennung, die unmittelbar rechts hinter der Ziffer, welche sich am weitesten rechts der besagten vierten Gruppe G4 befindet, angeordnet sind, gebildet wird, und eine sechste Gruppe G6 aus den drei Ziffern der MSISDN-Kennung, die unmittelbar rechts hinter der Ziffer, welche sich am weitesten rechts der besagten fünften Gruppe G5 befindet, angeordnet sind, gebildet wird.

4. Verfahren nach einem der Ansprüche 2 und 3, **dadurch gekennzeichnet, dass** ein erster Satz E1 aus den 4 Bits, die sich am weitesten links der MAC WiMAX-Adresse befinden, gebildet wird, ein zweiter Satz E2 aus den 4 Bits, die unmittelbar rechts hinter dem Bit, welches sich am weitesten rechts des besagten ersten Satzes E1 befindet, angeordnet sind, gebildet wird, ein dritter Satz E3 aus den 10 Bits, die unmittelbar rechts hinter dem Bit, welches sich am weitesten rechts des besagten zweiten Satzes E2 befindet, angeordnet sind, gebildet wird, ein vierter Satz E4 aus den 10 Bits, die unmittelbar rechts hinter dem Bit, welches sich am weitesten rechts des besagten dritten Satzes E3 befindet, angeordnet sind, gebildet wird, ein fünfter Satz E5 aus den 10 Bits, die unmittelbar rechts hinter dem Bit, welches sich am weitesten rechts des besagten vierten Satzes E4 befindet, angeordnet sind, gebildet wird, und ein sechster Satz E6 aus den 10 Bits, die unmittelbar rechts hinter dem Bit, welches sich am weitesten rechts des besagten fünften Satzes E5 befindet, angeordnet sind, gebildet wird.

5. Verfahren nach einem der Ansprüche 2 bis 4, **dadurch gekennzeichnet, dass** man die aus den zwei Ziffern der besagten ersten Gruppe G1 gebildete Dezimalzahl anhand einer Tabelle, welche die Entsprechungen zwischen Ziffernpaaren und Binärzahlen festlegt, in eine Binärzahl konvertiert, und dass man die besagte durch die N1 Bits des besagten ersten Satzes E1 bestimmte Binärzahl anhand der besagten Entsprechungstabelle in eine Dezimalzahl einer ersten Gruppe G1 konvertiert.

6. Vorrichtung (D) zur bidirektionalen Konversion zwischen Kommunikationskennungen, bestehend aus P Ziffern, und Kommunikationsadressen, bestehend aus K Bits, von mobilen Endgeräten (MS), die mit mindestens zwei verschiedenen Kommunikationsnetzwerk-Typen verbunden werden können, **dadurch gekennzeichnet, dass** sie Verarbeitungsmittel (MT) umfasst, die dazu ausgelegt sind, i) im Fall des Empfangs einer Kommunikationskennung, diese in eine gewählte Anzahl M von Gruppen Gm mit mindestens einer Ziffer, welche eine Dezimalzahl bestimmt, zu zerlegen, und anschließend eine jede der besagten M Dezimalzahlen in eine Binärzahl mit einer gewählten Anzahl Nm von Bits zu konvertieren und eine Kommunikationsadresse mit den besagten M Binärzahlen zu bilden, indem deren jeweilige Bits in gewählten Positionen, die den besagten M Gruppen Gm zugewiesen wurden, angeordnet werden, und ii) im Fall des Empfangs einer Kommunikationsadresse, diese in M Sätze Em von Nm Bits, von denen ein jedes eine Binärzahl bestimmt, zu zerlegen, und anschließend eine jede der besagten M Binärzahlen in eine Dezimalzahl mit mindestens einer Ziffer, welche eine Gruppe Gm bildet, zu konvertieren und eine Kommunikationskennung mit den besagten Ziffern der M Gruppen Gm zu bilden, indem diese in gewählten Positionen, die ihnen zugewiesen wurden, angeordnet werden.

7. Vorrichtung nach Anspruch 6, **dadurch gekennzeichnet, dass** die besagten Verarbeitungsmittel (MT) dazu ausgelegt sind, bei Vorhandensein von Kommunikationskennungen vom Typ MSISDN, bestehend aus fünfzehn Ziffern, und von Kommunikationsadressen vom Typ MAC WiMAX, bestehend aus 48 Bits, eine Zerlegung in eine Anzahl M von Gruppen Gm von gleich 6 vorzunehmen.

8. Vorrichtung nach Anspruch 7, **dadurch gekennzeichnet, dass** die besagten Verarbeitungsmittel (MT) dazu ausgelegt sind, i) eine erste Gruppe G1 mit den zwei Ziffern der MSISDN-Kennung, die sich am weitesten links befinden, ii) eine zweite Gruppe G2 mit der Ziffer der MSISDN-Kennung, die unmittelbar rechts hinter der Ziffer, welche sich am weitesten rechts der besagten ersten Gruppe G1 befindet, angeordnet ist, iii) eine dritte Gruppe G3 mit den drei Ziffern der MSISDN-Kennung, die unmittelbar rechts hinter der Ziffer, welche sich am weitesten rechts der besagten zweiten Gruppe G2 befindet, angeordnet sind, iv) eine vierte Gruppe G4 mit den drei Ziffern der MSISDN-Kennung, die unmittelbar rechts hinter der Ziffer, welche sich am weitesten rechts der besagten dritten Gruppe G3 befindet, angeordnet sind, v) eine fünfte Gruppe G5 mit den drei Ziffern der MSISDN-Kennung, die unmittelbar rechts hinter der Ziffer, welche sich am weitesten rechts der besagten vierten Gruppe G4 befindet, angeordnet sind, und vi) eine sechste Gruppe G6 mit den drei Ziffern der MSISDN-Kennung, die unmittelbar rechts hinter der Ziffer, welche sich am weitesten rechts der besagten fünften Gruppe G5 befindet, angeordnet sind, zu bilden.

9. Vorrichtung nach einem der Ansprüche 7 und 8, **dadurch gekennzeichnet, dass** die besagten Verarbeitungsmittel (MT) dazu ausgelegt sind, i) einen ersten Satz E1 mit den 4 Bits, die sich am weitesten links der MAC WiMAX-Adresse befinden, ii) einen zweiten Satz E2 mit den 4 Bits, die unmittelbar rechts hinter dem Bit, welches sich am weitesten rechts des besagten ersten Satzes E1 befindet, angeordnet sind, iii) einen dritten Satz E3 mit den 10 Bits, die unmittelbar rechts hinter dem Bit, welches sich am weitesten rechts des besagten zweiten Satzes E2 befindet, angeordnet sind, iv) einen vierten Satz E4 mit den 10 Bits, die unmittelbar rechts hinter dem Bit, welches sich am weitesten rechts des besagten dritten Satzes E3 befindet, angeordnet sind, v) einen fünften Satz E5 mit den 10 Bits, die unmittelbar rechts hinter dem Bit, welches sich am weitesten rechts des besagten vierten Satzes E4 befindet, angeordnet sind, und vi) einen sechsten Satz E6 mit den 10 Bits, die unmittelbar rechts hinter dem Bit, welches sich am weitesten rechts des besagten fünften Satzes E5 befindet, angeordnet sind, zu bilden.

10. Vorrichtung nach einem der Ansprüche 7 bis 9, **dadurch gekennzeichnet, dass** die besagten Verarbeitungsmittel (MT) dazu ausgelegt sind, i) die aus den zwei Ziffern einer ersten Gruppe G1 gebildete Dezimalzahl anhand einer Tabelle, welche die Entsprechungen zwischen Ziffernpaaren und Binärzahlen festlegt, in eine Binärzahl zu konvertieren, und eine Binärzahl, bestimmt durch die N1 Bits des besagten ersten Satzes E1, anhand der besagten Entsprechungstabelle in eine Dezimalzahl einer ersten Gruppe G1 zu konvertieren.

11. Netzwerkgerät (ER) für ein Kernnetzwerk (RD), welches mindestens an zwei drahtlose Netzwerke unterschiedlichen Typs angeschlossen ist, **dadurch gekennzeichnet, dass** es eine Konversionsvorrichtung (D) gemäß einem der Ansprüche 6 bis 10 umfasst.
